# EUROPÄISCHE PATENTANMELDUNG

(11) **EP 1 146 719 A2**
(43) Veröffentlichungstag der Anmeldung: **17.10.2001**
(21) Anmeldenummer: 01109041.2
(22) Anmeldetag: 11.04.2001
(51) Int. Cl.: H04M 3/51

(54) **Verfahren zum Aufbau von Verbindungen an ein in einem Kommunikationsnetz verteiltes Call-Center**

(30) Priorität: 14.04.2000 DE 10018628
(71) Anmelder: SIEMENS AKTIENGESELLSCHAFT, 80333 München (DE)
(72) Erfinder: Gerhäuser, Wolfgang, Dr., 81377 München (DE)

(57) **Zusammenfassung**

Eine aufzubauende Verbindung (vcc) an eines der ein Call-Center (CC) bildenden Agenten-Endgeräte (AE), die zumindest zwei Vermittlungen (V2,3) zugeordnet sind, wird an eine vorgegebene Abfrage-Vermittlung (V1) vermittelt, von der eine Anfrage (abm) über das Kommunikationsnetz (KN) an eine dem Call Center (CC) zugeordnete Vermittlungsanlage (V3) signalisiert wird. Bei der wird gemäß dem Status des Call Centers (CC) eine Verbindungszielinformation (zi) ermittelt und an die Abfrage-Vermittlung (V1) signalisiert, in der die Verbindung (vcc) gemäß der Verbindungszielinformation (zi) aufgebaut wird.

## Beschreibung

Seit geraumer Zeit werden in Kommunikationsnetzen Rufannahmezentren, sogenannte Call-Center eingesetzt. Einem Call-Center sind mehrere Agenten-Endgeräte bzw. Agenten zugeordnet, die mit Hilfe einer einheitlichen Service-Rufnummer angerufen werden können. Hierbei wird bei einem Anruf an ein Call-Center mit einer einheitlichen Service-Rufnummer der Ruf bzw. die ankommende Verbindung mit Hilfe der im Kommunikationsnetz angeordneten Vermittlungsstellen an ein freies Agenten-Endgerät vermittelt. In zunehmendem Maße sind Call-Center in Kommunikationsnetzen vorgesehen, bei denen die Agenten-Endgeräte an unterschiedliche Vermittlungen angeschlossen sind. Diese Teile bzw. Zweigstellen eines Call-Centers bzw. der Agenten-Endgeräte können über ein Kommunikationsnetz hinaus an unterschiedliche Kommunikationsnetze und damit auch unterschiedliche Vermittlungen - beispielsweise öffentliche oder private Vermittlungen - verteilt sein.

Für die Verteilung der ankommenden Rufe bzw. der aufzubauenden Verbindungen an die verteilten Teile eines Call-Centers bzw. deren Agenten-Endgeräte kann ein zentraler Einwahlpunkt vorgesehen werden, der durch die Service-Rufnummer angewählt wird und bei dem alle Rufe bzw. aufzubauenden Verbindungen für das jeweilige Call-Center ankommen. Von diesem zentralen Einwahlpunkt, der in einer vorgegebenen Vermittlung eines Kommunikationsnetzes realisiert ist, werden die Rufe bzw. die aufzubauenden Verbindungen an die verschiedenen Teile des Call-Centers bzw. an die Vermittlungen verteilt, denen die jeweiligen Teile des Call-Centers zugeordnet sind. Alternativ können anstelle eines zentralen Einwahlpunktes die Rufe bzw. die aufzubauenden Verbindungen über die zugeordnete Vermittlung an das geographisch nächstgelegene Call-Center vermittelt werden. Falls in diesem Teil des Call-Centers die aufzubauende Verbindung bzw. der Verbindungswunsch nicht bearbeitet werden kann - beispielsweise aufgrund einer Belegung aller Agenten-Endgeräte - wird die aufzubauende Verbindung an ein anderes Call-Center bzw. dessen zugeordnete Vermittlung weitergeleitet bzw. umgeleitet. Bei beiden vorhergehend beschriebenen Varianten wird die aufzubauende Verbindung über zumindest zwei zwischen den Vermittlungen eingerichtete Verbindungsleitungen geführt, die im ungünstigsten Fall eine Schleife bilden können und zu höheren Gebühren bzw. Kosten führen kann.

Gemäß einer weiteren Alternative kann das Call-Center in einem intelligenten Netz - in der Fachwelt auch mit IN bezeichnet - realisiert sein, wobei die Teile des Call-Centers in dem intelligenten Netz verteilt sind. Hierbei wird die Belegung mehrerer Verbindungsleitungen zwischen den Vermittlungen dadurch vermieden, dass die aufzubauende Verbindung bis zu einer Abfragevermittlung signalisiert wird. Diese Abfragevermittlung ist in der Fachwelt als Service-Switching-Point (SSP) bekannt und kann in der Vermittlung des einen Verbindungsaufbau einleitenden Endgerätes oder in einer räumlich nahe gelegenen Vermittlung realisiert sein. Von dieser Abfragevermittlung wird eine Abfrage über das intelligente Netz mit Hilfe eines spezifischen Protokolls, d.h. ein IN-Protokoll, zu einem Service-Control-Point (SCP) übermittelt, ohne dass die aufzubauende Verbindung dorthin aufgebaut wird. Der Service-Control-Point (SCP) ermittelt eine Verbindungszielinformation und übermittelt diese an die Abfragevermittlung. Aufgrund dieser Information wird die aufzubauende Verbindung bzw. der ankommende Ruf direkt zu dem durch die Verbindungszielinformation definierten Call-Center bzw. einem zugeordneten Agenten-Endgerät aufgebaut, ohne dass Verbindungen über die Leitungen zwischen den Vermittlungen aufgebaut bzw. belegt werden. Bei dieser Variante muss der Service-Control-Point Informationen, insbesondere über den Status bzw. die Auslastung des diesem Service-Control-Point zugeordneten Teils des Call-Centers besitzen. Diese Informationen sind entweder in Service-Control-Points direkt oder optional über eine Verbindung zu einem Koordinationsrechner bzw. einem Statusrechner des Teils bzw. der Zweigstelle des Call-Centers verfügbar. Da diese Informationen für eine aktuelle Verteilung der aufzubauenden Verbindungen laufend zu aktualisieren sind, sind zusätzliche Verbindungen - beispielsweise Datenverbindungen über ein Wideband-Area-Netzwerk - zwischen dem Service-Control-Point und dem betreffenden Teil des Call-Centers erforderlich. Bei dieser Realisierung der Verteilung von aufzubauenden Verbindungen an verteilte Call-Center sind zusätzlich Service-Control-Points in den Telekommunikationsnetzen erforderlich, die einen zusätzlichen schaltungstechnischen und programmtechnischen Aufwand erfordern. Da insbesondere die Rechner für die Realisierung eines Service-Control-Points sich überwiegend nicht an den Standorten der Teile der Call-Center bzw. des Call-Centers befinden, ist ein zusätzlicher Aufwand für die Verbindungen bzw. Datenverbindungen zwischen dem jeweiligen Rechner und dem Call-Center erforderlich.

Die der Erfindung zugrundeliegende Aufgabe besteht darin, die Verteilung von aufzubauenden Verbindungen an ein in zumindest einem Kommunikationsnetz verteiltes Call-Center, insbesondere hinsichtlich des Aufwandes zu verbessern. Die Aufgabe wird durch die Merkmale der Patentansprüche 1 und 2 gelöst.

Ein wesentlicher Aspekt des erfindungsgemäßen Verfahrens ist darin zu sehen, dass eine aufzubauende Verbindung an eine vorgegebene Abfrage-Vermittlung vermittelt wird und von dieser eine Anfrage über das Kommunikationsnetz an eine dem bestimmten Call-Center zugeordnete Vermittlungsanlage signalisiert wird, bei der gemäß dem Status des Call-Centers eine Verbindungszielinformation ermittelt und an die Abfrage-Vermittlung signalisiert wird. In dieser wird die aufzubauende Verbindung gemäß der Verbindungszielinformation aufgebaut. Gemäß eines weiteren wesentlichen Aspekts eines weiteren erfindungsgemäßen Verfahrens wird von der Abfrage-Vermittlung eine Anfrage an einen Statusrechner des bestimmten Call-Centers signalisiert und in diesem gemäß dem Status des Call-Centers eine Verbindungszielinformation ermittelt und an die Abfrage-Vermittlung signalisiert. In dieser wird diese aufzubauende Verbindung gemäß der Verbindungszielinformation aufgebaut.

Ein wesentlicher Vorteil des erfindungsgemäßen Verfahrens ist darin zu sehen, dass der Aufwand für die Realisierung eines Service-Control-Points in einem intelligenten Netz bzw. der Aufwand für die Bereitstellungen von zusätzlichen Verbindungen zwischen den Vermittlungen erheblich reduziert wird. Des weiteren sind keine zusätzlichen Verbindungen, insbesondere Daten-Fernverbindungen vom Service-Control-Point zu den jeweiligen Teilen des Call-Centers bzw. den Call-Center-Zweigstellen erforderlich. Des weiteren können für die Ermittlung der Verbindungszielinformation die in dem jeweiligen Teil des Call-Center benutzten Verfahren für die Ermittlung einer Verbindungszielinformation in die Beantwortung einer Anfrage einer Abfrage-Vermittlung einbezogen werden.

Gemäß einer weiteren Ausgestaltung des erfindungsgemäßen Verfahrens ist eine vorgegebene Abfrage-Vermittlung jeweils einem Bereich des zumindest einen Kommunikationsnetzes zugeordnet und in diesem Bereich werden aufzubauende Verbindungen zu dem bestimmten Call-Center an die zugeordnete Abfrage-Vermittlung vermittelt - Anspruch 3. Durch diese Maßnahmen werden zusätzliche Vermittlungs- bzw. Signalisierungswege und lange Signalisierungszeiten vermieden.

Als Protokoll für die Signalisierung für die Abfrage der Verbindungszielinformation kann eine Signalisierung eines intelligenten Netzes oder eine Signalisierung eines Kommunikationsnetzes eingesetzt werden - Anspruch 4. Hierbei sind insbesondere proprietäre, sehr einfache Signalisierungen, Signalisierungen anderer Kommunikationsnetze oder Daten-Kommunikationsnetz-Signalisierungen vorteilhaft.

Gemäß einer weiteren Ausgestaltung des erfindungsgemäßen Verfahrens tauschen die Call-Center Informationen über ihren Status untereinander aus, wobei der Kommunikationsaustausch über die Vermittlungen des zumindest einen Kommunikationsnetzes oder über weitere Kommunikationsnetze erfolgt - Anspruch 6. Bei geographisch weit auseinanderliegenden Teilen des Call-Centers ist ein Austausch der Informationen über das vorhandene Kommunikationsnetz vorteilhaft, wobei bei geographischen nahegelegenen Teilen des Call-Centers andere Kommunikationsnetze, insbesondere lokale Kommunikationsnetze wirtschaftlich günstiger einsetzbar sind. Die auszutauschenden Informationen stellen insbesondere Informationen über die Auslastung der jeweiligen Teile des Call-Centers dar, und geben als Verbindungszielinformation die Vermittlung an, deren Teil bzw. Zweigstelle des Call-Centers aktuell eine niedrige Auslastung aufweist - Anspruch 7. Hierdurch ist eine gleichmäßige Auslastung der Teile bzw. der Zweigstellen eines Call-Centers möglich, wobei andere Kriterien, wie beispielsweise eine Verteilung der aufzubauenden Verbindungen zu bestimmten Agenten-Endgeräten mit Agenten mit speziellen Fachkenntnissen alternativ möglich ist. Dies wird vorteilhaft dadurch erreicht, dass Informationen über die Warteschlangenlänge der jeweiligen Teile des Call-Centers ausgetauscht werden, und dass als Verbindungszielinformation eine der Vermittlungen angegeben ist, deren Teil des Call-Centers eine aktuell kürzere Warteschlangenlänge aufweist - Anspruch 8.

Alternativ ist der Status der Teile des Call-Centers durch eine statistische Verteilung der Verbindungen vorgegeben, wobei die statistische Verteilung durch eine numerische, prozentuale oder anteilige Information angezeigt wird - Anspruch 9. Bei einer statistischen Verteilung der Verbindung kann vorteilhaft ein Informationsaustausch entfallen, wodurch Ressourcen sowohl der Kommunikationsnetze als auch in den Vermittlungen bzw. dem Statusrechner eingespart werden können.

Weitere vorteilhafte Ausgestaltungen des erfindungsgemäßen Verfahrens sind den weiteren Ansprüchen zu entnehmen.

Im Folgenden wird ein Ausführungsbeispiel des erfindungsgemäßen Verfahrens anhand einer zeichnerischen Darstellung näher erläutert.

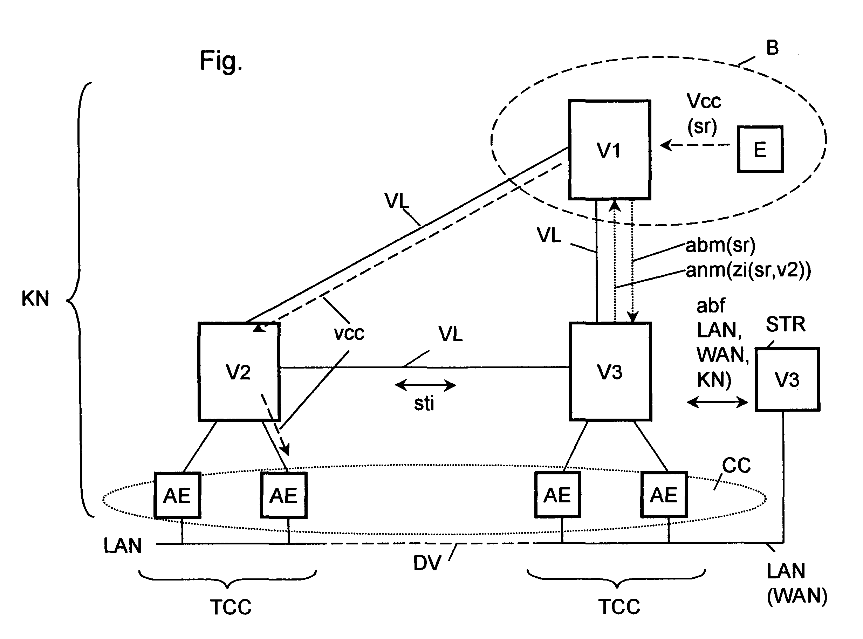

Die Figur zeigt ein Kommunikationsnetz KN, das durch mehrere Vermittlungen V gebildet ist, wobei in der Figur zur Erläuterung des erfindungsgemäßen Verfahrens beispielhaft drei Vermittlungen V1..V3 dargestellt sind. Die drei Vermittlungen V1..V3 sind durch Verbindungsleitungen VL untereinander verbunden. Für das Ausführungsbeispiel seien angenommen, dass ein Call-Center CC durch mehrere Agenten-Endgeräte AE gebildet ist, die an die zweite und dritte Vermittlung V2,3 angeschlossen sind. Das Call-Center CC kann über mehr als zwei Vermittlungen V und auch über unterschiedliche Kommunikationsnetze KN verteilt sein, wobei für die verständlichere Erläuterung des erfindungsgemäßen Verfahrens lediglich zwei Vermittlungen V2,3 in ein Call-Center CC einbezogen sind. Die jeweils an die zweite und dritte Vermittlung V2,3 angeschlossenen Agenten-Endgeräte AE bilden jeweils ein Teil TCC des Call-Centers CC bzw. stellen eine Zweigstelle des Call-Centers CC dar.

Für das Ausführungsbeispiel sei des weiteren angenommen, dass von einem an die erste Vermittlung V1 angeschlossenen Endgerät E - beispielsweise ein ISDN-Fernsprechendgerät - ein Aufbau einer Verbindung vcc zu einem Agenten-Endgerät AE des Call-Centers CC eingeleitet wird - in der Figur durch einen mit vcc gekennzeichneten Pfeil angedeutet. Das Call-Center CC wird hierbei mit einer gemeinsamen Service-Identifikation sr adressiert, das heisst als Verbindungszielinformation ist die Service-Rufnummer sr des Call-Centers CC angegeben - in der Figur durch (sr) angedeutet. Die aufzubauende Verbindung vcc wird an eine Abfrage-Vermittlung V1 vermittelt, das heisst die Verbindung vcc wird bis zur ersten Vermittlung V1 aufgebaut. Der Abfrage-Vermittlung V1 ist jeweils ein geographischer Bereich B zugeordnet, wobei alle in diesem geographischen Bereich B eingeleiteten Aufbauten von Verbindungen vcc mit der Service-Rufnummer sr des Call-Centers CC an diese Abfrage-Vermittlung V1 vermittelt werden.

Von der Abfrage-Vermittlung V1 wird eine Anfrage-Meldung abm an eine Vermittlung V2,3 signalisiert, d.h. in einem Signalisierungskanal der Verbindungsleitungen VL übermittelt, denen die Agenten-Endgeräte AE bzw. jeweils ein Teil TCC des Call-Centers CC zugeordnet sind. Beim Ausführungsbeispiel wird die Anfragemeldung abm beispielsweise an die dritte Vermittlung V3 signalisiert. In dieser dritten Vermittlung V3 ist der Status - belegt oder frei - sowohl der an die dritte Vermittlung V3 angeschlossenen Agenten-Endgeräte AE als auch der an die zweite Vermittlung V2 angeschlossenen Agenten-Endgeräte AE bekannt. Um einen aktuellen Status sowohl in der zweiten als auch in der dritten Vermittlung V2,3 der an diese angeschlossenen und dem Call-Center CC zugehörigen Agenten-Endgeräte AE zu erhalten, werden Status-Informationen sti zwischen der zweiten und dritten Vermittlung V2,3 ausgetauscht, die insbesondere Informationen über die Auslastung bzw. den Belegungszustand der diesem Call-Center CC zugehörigen Agenten-Endgeräte AE anzeigen.

Für das Ausführungsbeispiel sei angenommen, dass keines der an die dritte Vermittlung V3 angeschlossenen Agenten-Endgeräte AE frei ist, jedoch eines der an die zweite Vermittlung V2 angeschlossenen Agenten-Endgeräte AE den Verbindungswunsch VCC entgegennehmen kann. Folglich wird von der dritten Vermittlung V3 an die Abfrage-Vermittlung V1 eine Antwortmeldung anm signalisiert, das heisst in einem Signalisierungskanal der Verbindungsleitungen V übermittelt, die eine Verbindungszielinformation zi enthält, dass die aufzubauende Verbindung vcc an die zweite Vermittlung V2 zu steuern ist, in der Agenten-Endgerät AE verfügbar ist.

Optional können die Status-Informationen sti über den Status der Agenten-Endgeräte AE in einem separaten Status-Rechner STR gesammelt werden, wobei dieser Status-Rechner STR dann über ein Datennetz, beispielsweise ein lokales Netz LAN oder ein Wide Band Netz (WDM), mit allen Agenten-Endgeräten AE verbunden ist. Da Agenten-Endgeräte AE überwiegend durch Personal-Computer realisiert sind, sind die Agenten-Endgeräte AE eines Teils TCC des Call-Centers CC üblicherweise untereinander über ein LAN verbunden, wobei die überregionale Verbindung zwischen den Teilen TCC des Call-Centers CC über Datenverbindungen DV erfolgen kann. Hierbei wird nach einer Signalisierung einer Abfragemeldung abm der Status der Agenten-Endgeräte AE über eine Abfrage abf beim Status-Rechner STR von der dritten Vermittlung V3 durchgeführt, wobei als Signalisierung für eine derartige Abfrage beliebige Protokolle verwendet werden können.

Für die Signalisierung der Abfragemeldung abm und der Antwortmeldung anm zwischen den Vermittlungen V1..V3 können proprietäre Protokolle eines vorhandenen Standards - beispielsweise die vorhandenen Zwischenamtssignalisierung Nr. 7 - oder auch eine Signalisierung eingesetzt werden, die in intelligenten Kommunikationsnetzen verwendet wird. In der Antwortmeldung anm ist eine Verbindungszielinformation zi eingefügt, die der ersten bzw. Abfrage-Vermittlung V1 anzeigt, dass die aufzubauende Verbindung vcc zur zweiten Vermittlung V2 bzw. zum dortigen Teil TCC des Call-Centers CC weitervermittelt bzw. aufgebaut werden soll. Diese Information ist durch die Service-Rufnummer sr und/oder durch eine Information v2 gebildet, die die zweite Vermittlung V2 anzeigt. Nach Empfang der Antwortmeldung anm in der ersten bzw. Abfrage-Vermittlung V1 wird in dieser der durch die Verbindungszielinformation zi angegebene Verbindungsaufbau eingeleitet bzw. durchgeführt, d.h. die Verbindung vcc wird an ein freies, an die zweite Vermittlung V2 angeschlossenes Agenten-Endgerät AE des Call-Centers CC vermittelt.

Die Verwendung des erfindungsgemäßen Verfahrens bleibt nicht auf das vorhergehend beschriebene Ausführungsbeispiel beschränkt, sondern kann in unterschiedlichen Kommunikationsnetzen - beispielsweise öffentlichen oder privaten Netzen oder Festnetzen oder Mobilnetzen - mit unterschiedlichsten Diensten - beispielsweise Fernsprechdienst, Datendienst, Faxdienst - eingesetzt werden, wobei die Signalisierungen und Protokolle auf die erfindungsgemäßen, zusätzlichen Anforderungen abzustimmen sind.

## Patentansprüche

1. Verfahren zum Aufbau von Verbindungungen (vcc) an ein durch eine Serviceidentifikation (sr) bestimmtes Call Center (CC), das in zumindest einem Kommunikationsnetz (KN) verteilt ist und dessen Agenten-Endgeräte (AE) zumindest zwei Vermittlungen (V2,3) zugeordnet sind,
- bei dem eine aufzubauende Verbindung an eine vorgegebene Abfrage-Vermittlung (V1) vermittelt wird,
- von der eine Anfrage (abm) über das zumindest eine Kommunikationsnetz (KN) an eine dem bestimmten Call Center (CC) zugeordnete Vermittlungsanlage (V3) signalisiert wird,
- bei der gemäß dem Status des Call Centers (CC) eine Verbindungszielinformation (zi) ermittelt und an die Abfrage-Vermittlung (V1) signalisiert wird,
- in der die Verbindung (vcc) gemäß der Verbindungszielinformation (zi) aufgebaut wird.

2. Verfahren zum Aufbau von Verbindungen (vcc) an ein durch eine Serviceidentifikation (sr) bestimmtes Call Center (CC), das in zumindest einem Kommunikationsnetz (KN) verteilt ist und dessen Agenten-Endgeräte (AE) zumindest zwei Vermittlungen (V2,3) zugeordnet sind,
- bei dem eine aufzubauende Verbindung (vcc) an eine vorgegebene Abfrage-Vermittlung (V1) vermittelt wird,
- von der eine Anfrage (anm) an einen Statusrechner (STR) des bestimmten Call Centers (CC) übermittelt wird,
- bei dem gemäß dem Status des Call Centers (CC) eine Verbindungszielinformation (zi) ermittelt und an die Abfrage-Vermittlung (V1) übermittelt wird,
- in der die Verbindung (vcc) gemäß der Verbindungszielinformation (zi) aufgebaut wird.

3. Verfahren nach Anspruch 1 oder 2, **dadurch gekennzeichnet,**
**daß** eine vorgegebene Abfrage-Vermittlung (V1) jeweils einem Bereich (B) des zumindest einen Kommunikationsnetzes (KN) - zugeordnet ist, und daß in dem Bereich (B) des Kommunikationsnetzes (KN) zu dem bestimmten Call Center (CC) aufzubauende Verbindungen (vcc) an die in diesem Bereich (B) zugeordneten Abfrage-Vermittlung (V1) vermittelt werden.

4. Verfahren nach einem der Ansprüche 1 bis 3, **dadurch gekennzeichnet,**
**dass** für die Signalisierung für die Abfrage der Verbindungszielinformation (zi) eine Signalisierung eines intelligenten Netzes oder eine Signalisierung eines Kommunikationsnetzes oder Datennetzes vorgesehen ist.

5. Verfahren nach Anspruch 4, **dadurch gekennzeich net**,
**dass** für die Signalisierung für die Abfrage der Verbindungszielinformation (zi) in der Abfrage-Vermittlung (V1) ein Signalisierungs-Vermittlungs-Punkt (SSP) realisiert ist.

6. Verfahren nach einem der vorhergehenden Ansprüche, **dadurch gekennzeichnet,**
**dass** die Call Center (CC) Informationen über ihren Status untereinander austauschen, wobei der Kommunikationsaustausch über die Vermittlungen (v1..3) oder über weitere Kommunikationsnetze erfolgt.

7. Verfahren nach Anspruch 6, **dadurch gekennzeich net**,
**dass** Informationen über die Auslastung der jeweiligen Teile (TCC) des Call Centers (CC) untereinander ausgetauscht werden, und dass als Verbindungszielinformation (zi) die Vermittlung (V2) angegeben ist, deren ein Teil (TCC) des Call Centers (CC) eine aktuell niedrigere Auslastung aufweist.

8. Verfahren nach Anspruch 6, **dadurch gekennzeich net**,
daß die Informationen über die Warteschlangenlänge der jeweiligen Teile (TCC) des Call-Centers (CC) ausgetauscht werden, und dass als Verbindungszielinformation (zi) eine der Vermittlungen (V2) angegeben ist, deren Teil (TCC) des Call-Centers (CC) eine aktuell kürzere Warteschlangenlänge aufweist.

9. Verfahren nach einem der vorhergehenden Ansprüche, **dadurch gekennzeichnet,**
**dass** der Status der Teile (TCC) des Call-Centers (CC) durch eine statistische Verteilung der Verbindungen (vcc) vorgegeben ist, wobei die statistische Verteilung durch eine numerische, prozentuale oder anteilige Information angezeigt wird.

10. Verfahren nach Anspruch 1 und einem der Ansprüche 3 bis 9, **dadurch gekennzeichnet,**
**daß** die aktuelle Verbindungszielinformation (zi) von den Teilen (TCC) des Call Centers (CC) an die zugeordnete Vermittlung (V3) übermittelt und bei einer Abfrage an die Abfrage-Vermittlung (V1) übermittelt wird.

11. Verfahren nach einem der vorhergehenden Ansprüche, **dadurch gekennzeichnet,**
**dass** die Verbindungszielinformation (zi) durch eine Service-rufnummer (sr) und/oder durch eine die Vermittlung (V2) angebende Information (v2) angezeigt wird, an die die aufzubauende Verbindung (vcc) zu vermitteln ist.

12. Verfahren nach einem der vorhergehenden Ansprüche, **dadurch gekennzeichnet,**
**dass** die Serviceidentifikation durch eine Servicerufnummer (sr) repräsentiert ist.
